Europäisches Patentamt

European Patent Office

Office européen des brevets

(11) Veröffentlichungsnummer: **0 494 433 A2**

# EUROPÄISCHE PATENTANMELDUNG

(21) Anmeldenummer: **91122061.4**

(51) Int. Cl.5: **G05B 19/403**

(22) Anmeldetag: **21.12.91**

(30) Priorität: **10.01.91 DE 4100534**

(43) Veröffentlichungstag der Anmeldung:
**15.07.92 Patentblatt 92/29**

(84) Benannte Vertragsstaaten:
**AT BE CH DE DK ES FR GB GR IT LI LU NL SE**

(71) Anmelder: **DÜRKOPP SYSTEMTECHNIK GMBH**
**Postfach 6**
**W-4800 Bielefeld 1(DE)**

(72) Erfinder: **Bruder, Wolfgang**
**Heidsiekstrasse 16**
**W-4800 Bielefeld 1(DE)**
Erfinder: **Niemann, Jürgen**
**Scharnhorststrasse 21**
**W-4970 Bad Oeynhausen(DE)**

(74) Vertreter: **Rehmann, Klaus-Thorsten, Dipl.-Ing.**
**c/o Dürkopp Adler AG, Postfach 6**
**W-4800 Bielefeld 1(DE)**

(54) **Verfahren zum Zuschnitt von richtungsbetonten Materialien.**

(57) Mittels einer CCD-Kamera, die mit einem Bildverarbeitungssystem verbunden ist, wird der Musterverlauf eines Schneidgutes zeilenweise erfaßt. Der erkannte Musterverlauf wird im Rechner mit dem Soll-Schnittlagenbild verglichen und dabei der Betrag der Soll/Ist Abweichung jeder auszuschneidenden Kontur vom Musterverlauf ermittelt. Konturdaten der auszuschneidenden Teile sind im Speicher der Steuerung als NC-Programm gespeichert. Sie werden als Unterprogramm gestartet und um den die Abweichung wiedergebenden Vektor gedreht und erneut gespeichert. Nach der so hergestellten Soll/Ist Übereinstimmung wird das veränderte NC-Programm als Schneidprogramm verwendet.

Fig. 1

EP 0 494 433 A2

Die Erfindung betrifft ein Verfahren zum rapportgerechten Zuschnitt von richtungsbetonten Materialien auf einer numerisch gesteuerten Schneidanlage nach dem Oberbegriff des Anspruchs 1.

Der Verlauf eines Musters innerhalb einer Stoffbahn ist über deren vollständige Ausbreitung gesehen nicht konstant, sondern durch Verzug oder auch Toleranzen beim Weben entstehen Abweichungen. Insbesondere wenn eine Vielzahl identischer Teile aus einer solchen Stoffbahn auszuschneiden sind, die alle den selben Musterverlauf aufweisen sollen, muß das Schnittlagenbild mit einer besonderen Akribie aufgebaut sein. Wenn der Zuschnitt mittels einer numerisch gesteuerten Schneidanlage erfolgt, bei dem das Schnittlagenbild in der Steuerung fest programmiert ist, kann in aller Regel keine Korrektur während des Schneidvorganges erfolgen, so daß mit einer entsprechende Menge von Ausschuß oder mit Teilen minderer Qualität zu rechnen ist.

Aus der DE-OS 39 10 322 ist eine automatische Zuschneidevorrichtung bekannt, mittels der die Form und das Muster eines zuzuschneidenden Stoffes erkennbar ist und bei dem eine Anpassung der Stoffmusterung an das Schnittmuster erreichbar ist.
Hierzu ist über der Schneidanlage eine Kamera angeordnet, mit der die Stoffmusterung erfaßt wird. Das von der Videokamera aufgenommene Bild wird auf einem Bildschirm angezeigt. Die auszuschneidenden Musterteile sind im Rechner 9 gespeichert und können von diesem aus gelesen und ebenfalls auf dem Bildschirm angezeigt werden. Durch entsprechende interaktive Kommunikation kann die Bedienperson die auszuschneidenden Teile auf dem Bildschirm so anordnen, daß sie in Übereinstimmung mit der Stoffmusterung gebracht werden. Hierzu ist es möglich, das auf dem Bildschirm dargestellte Bild zu vergrößern oder zu verkleinern, so daß jedes angezeigte Teil relativ zu der erkannten Stoffmusterung angeordnet werden kann.

Wenn eine Vielzahl identischer Teile aus einer Stoffbahn auszuschneiden sind, ist dieses bekannte Verfahren zu zeitaufwendig, um wirtschaftlich einsetzbar zu sein.

Der Erfindung liegt die Aufgabe zugrunde, ein Verfahren zum rapportgerechten Zuschnitt von richtungsbetonten Materialen anzugeben, bei dem die auszuschneidenden Konturen dem Musterverlauf des Schneidgutes angepaßt sind und das vollautomatisch, d.h. ohne Eingriff einer Bedienperson, ablaufen kann.

Die Lösung der Aufgabe erfolgt durch die kennzeichnenden Merkmale der Ansprüche 1 oder 2, wobei die Erfindung nach Anspruch 1 die Aufgabe löst, wenn keine Verdrehung des Schnittlagenbildes notwendig ist, weil beispielsweise Musterabweichungen des Schneidgutes nur in einer Richtung zu erwarten sind, während die Erfindung nach Anspruch 2 die Aufgabe auch dann löst, wenn Musterabweichung in zwei Richtungen zu erwarten oder zu eliminieren sind.

Vorteilhaft an dem erfindungsgemäßen Verfahren ist, daß quasi eine sehende NC-Steuerung geschaffen wurde, die es gestattet, daß sich ein bestehendes NC-Programm, d.h. das im Rechner 9 gespeicherte Schnittlagenbild, selbsttätig verändert, um sich an den nicht konstanten, nicht beeinflußbaren Musterverlauf des Schneidgutes anzupassen. Dadurch das die Abweichung jedes einzelnen auszuschneidenden Teiles vom vorgegebenen Musterverlauf ermittelt wird, weil nach dem Zuschnitt jedes ausgeschnittene Teil denselben Toleranzbereich aufweist, wird eine ausschußfreie Produktion gewährleistet.

Mit den Fortbildungen der Erfindung nach den Ansprüchen 2 und 3 ist es möglich, daß bei der Abtastung der Materialbahn durch die Kamera nur ein Vergleich des ermittelten Signalpegels mit einem definierten Signalpegel erfolgen muß, um festzustellen ob es sich um den definierten optisch auffälligen Punkt handelt.

Mit der Ausgestaltung des Verfahrens nach Anspruch 4 kann eine noch schnellere Verarbeitung erfolgen, weil nicht jedes einzelne Teil aus dem Schnittlagenbild mit der Materialbahn verglichen wird, sondern eine dem Grobbild entsprechende Vielzahl von Musterteilen. In der weiteren Ausgestaltung nach Anspruch 5 wird es möglich, nur dann ein einzelnes Zuschnitteil auf seine Lage gegenüber der Musterbahn zu überprüfen, wenn im Grobbild festgestellt wurde, daß eine einen vorgegebenen Toleranzbereich überschreitende Abweichung der Soll-/Istlage vorhanden ist.

Anhand einer Zeichnung soll die Erfindung nachfolgend näher erläutert werden.

Es zeigt:

Fig. 1      die vereinfachte perspektivische Darstellung einer numerisch gesteuerten Schneidanlage,

Fig. 2      die Draufsicht auf das Schneidgut, mit den auszuschneidenden Konturen in teilweiser Darstellung,

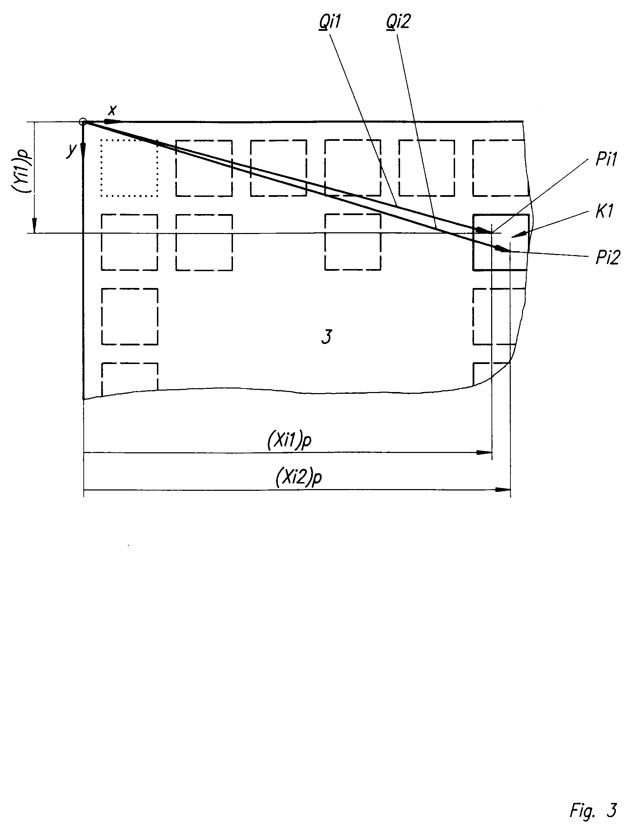

Fig. 3      die Draufsicht auf das Schneidgut, mit den auszuschneidenden Konturen in teilweiser Darstellung,

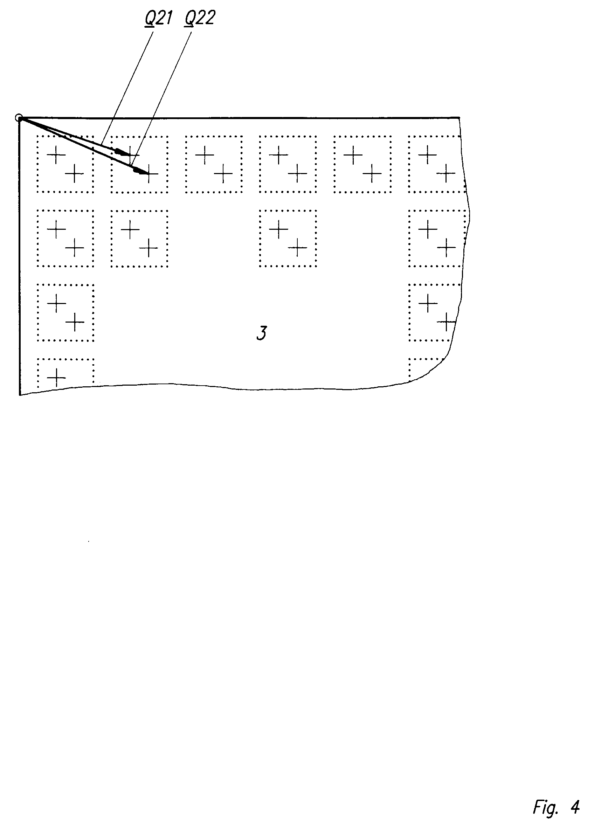

Fig. 4      die Draufsicht auf das Schneidgut in teilweiser Darstellung, wobei die auszuschneidenden Konturen nur angedeutet sind,

Fig. 5      das schematische Schnittlagenbild, so wie es im Rechner 9 gespeichert ist,

Fig. 6a      die überlagerte Darstellung von Schneidgut und Schnittlagenbild ohne Abweichungen zueinander,

Fig. 6b die überlagerte Darstellung von Schneidgut und Schnittlagenbild mit Abweichungen zueinander,

Fig. 6c eine vergrößerte Darstellung nach Fig. 6b,

Fig. 6d eine Feinbilddarstellung aus Fig. 6c, nachdem die Abweichungen von Schnittlagenbild zu Stoffmuster korrigiert wurden,

Fig. 6e eine Feinbilddarstellung aus der hervorgeht, daß zur Erzielung der Sollage neben einer Verschiebung auch eine Verdrehung notwendig ist,

Fig. 7 eine vektorielle Darstellung der maximal tolerierbaren Abweichung $t$ der Vektoren $Q_{in}$ und $N_{in}$ zueinander,

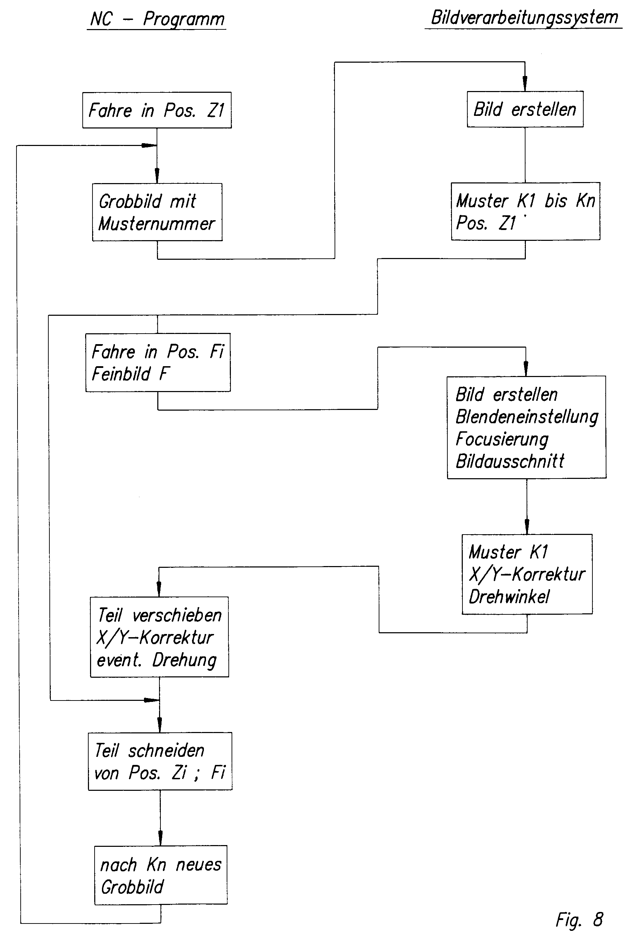

Fig. 8 das Flußdiagramm des Bildverarbeitungssystems.

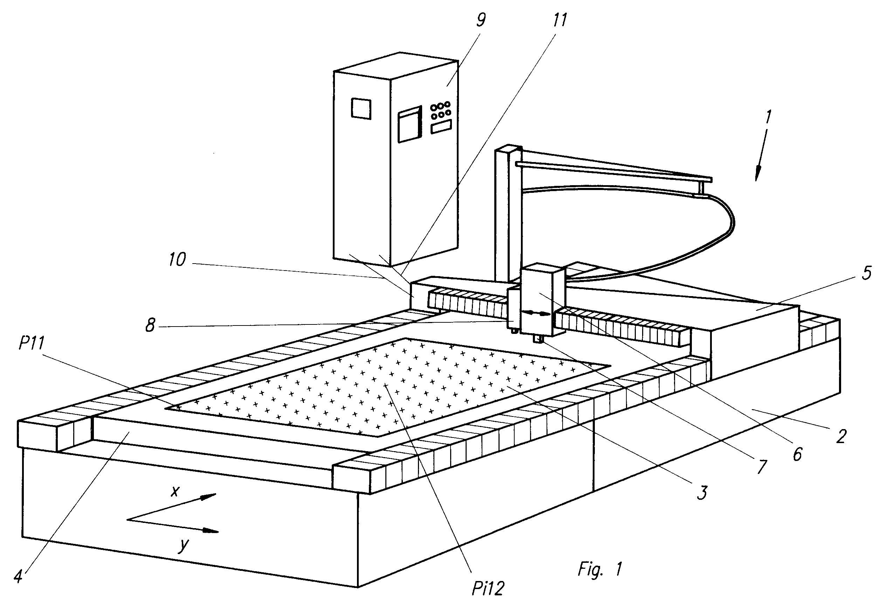

Fig. 1 zeigt die perspektivische Darstellung einer numerisch gesteuerten automatischen Höchstdruckfluidstrahlschneidanlage 1.

Auf dem Schneidtisch 2 ist längsverschieblich das Schneidportal 5 angeordnet. Das Schneidgut 3 liegt auf einer Palette 4 auf, die in nicht dargestellter Weise mit einem Transportsystem verbunden ist und selbsttätig in den Schneidbereich einfahren kann. Bei dem Schneidgut 3 kann es sich um eine vorgeschnittene Lage handeln, wie dies hier dargestellt ist. Selbstverständlich ist es aber auch möglich, direkt von der Rolle aus zu arbeiten und somit einen endlosen Zuschnitt zu zu vorzunehmen. Auf dem Schneidportal 5 ist querverschieblich hierzu der Schneidkopfträger 6 mit der Schneiddüse 7 angeordnet. Über eine Leitung 11 ist die automatische Schneidanlage zum Austausch von Steuerdaten mit dem die numerische Steuerung beinhaltenden Rechner 9 verbunden.

Des weiteren ist auf dem Schneidportal 5 neben dem Schneidkopfträger 6 bzw. der Schneiddüse 7 eine Kamera 8 angeordnet. Bei dieser Kamera 8 handelt es sich um eine CCD-Kamera, die über die Leitung 10 mit einem ebenfalls im Rechnerprogramm enthaltenen Bildverarbeitungssystem (wie es beispielsweise von der deutschen Firma Signum in München vertrieben wird) verbunden ist. Nicht gezeigte Stellglieder an der Kamera sorgen für die automatische Blendensteuerung und Fokussierung sowie einer Veränderung der Brennweite zur Steuerung der Bildgröße. Zusammen mit dem Schneidkopfträger 6 ist die Kamera 8 in Querrichtung (Y-Richtung) auf dem Schneidportal 5 verschiebbar. Die Bewegungen des Schneidportals 5, des Schneidkopfträgers 6 bzw. der Kamera 8 werden durch Schrittmotoren, die hier nicht näher dargestellt sind, eingeleitet.

Über die Kamera 8 kann das auf der Palette 4 angeordnete Schneidgut 3 zeilenweise abgetastet werden. Dabei wird durch die Erfassung unterschiedlicher Farbwerte ein unterschiedlicher Signalpegel SP erzeugt, der vom Rechner 9 ausgewertet werden kann, wie nachfolgend noch beschrieben wird.

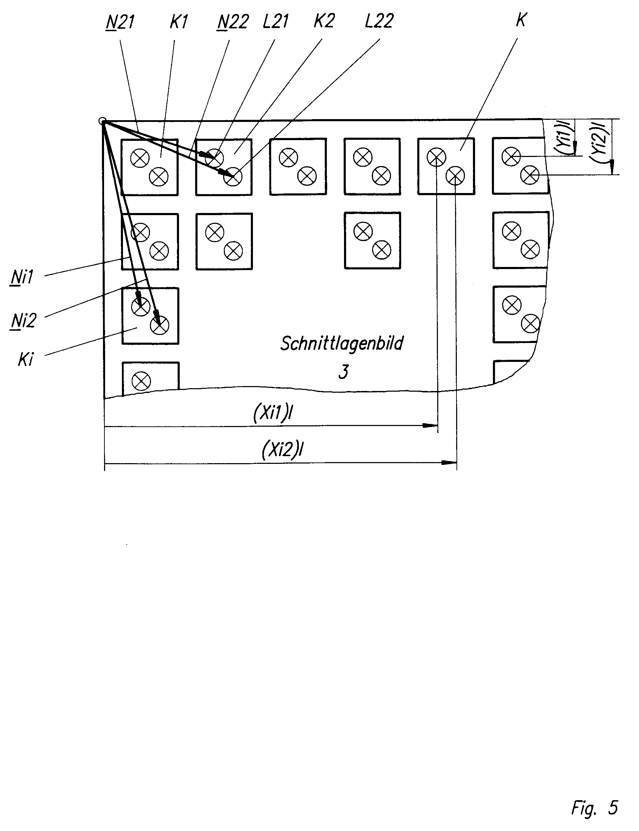

Im Rechner 9 ist das Schneidprogramm gespeichert, das auch das auszuschneidende Schnittlagenbild enthält. Ein solches Schnittlagenbild zeigt ausschnittsweise Fig. 5. In diesem Schnittlagenbild sind die auszuschneidenden Konturen K1, K2 ... Ki enthalten.

Aus dem Musterverlauf des Schneidgutes 3 werden mindestens zwei durch je ein Koordinatenpaar $(Xi1/Yi1)p;(Xi2/Yi2)p$ darstellbare optisch auffällige spezifische Punkte (P11, P12; P21, P21; ...; Pi1, Pi2) ausgewählt.

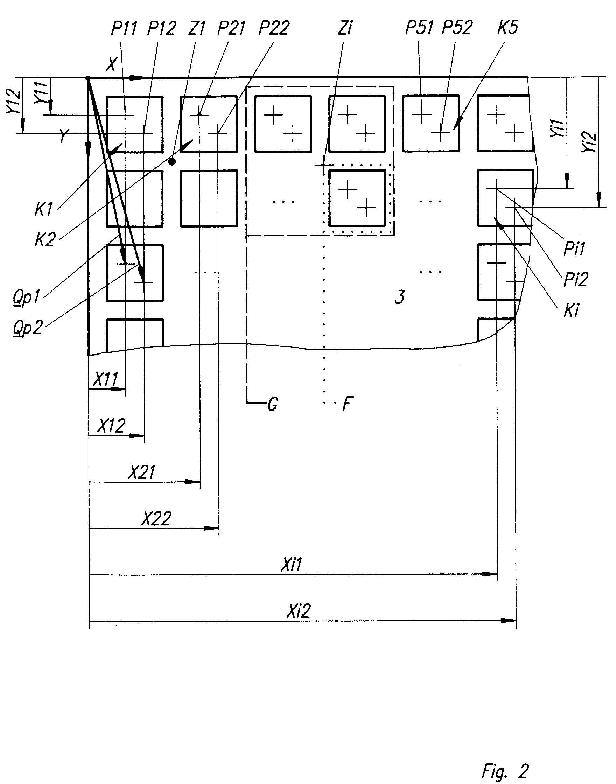

In Fig. 2 sind diese Punkte durch Kreuze dargestellt, die parallel zu den Kanten der Konturen Ki ausgerichtet sind. Jeder dieser Punkte kann durch einen Vektor Q11, Q12 ... Qi1, Qi2 dargestellt werden. Diese Vektoren verlaufen von einem frei wählbaren Ursprungspunkt 0 ab, der hier im Ausführungsbeispiel jeweils in der linken oberen Ecke des Schneidgutes 3 angenommen wurde und bezogen auf das Koordinatensystem durch die Lage X0 = 0; Y0 = 0 (wobei i = 0) beschrieben wird. Diese optisch auffälligen spezifischen Punkte Pi1, Pi2 werden so gewählt, daß sie jeweils charakteristisch sind für eine auszuschneidende Kontur. Wenn das Schneidgut 3 einen regelmäßigen Musterverlauf besitzt, kehren diese spezifischen Punkte Pi1, Pi2 ebenso regelmäßig wieder.

Im Schnittlagenbild, das die einzelnen auszuschneidenden Konturen K1, K2 ... Ki enthält, werden zu jeder Kontur ebenfalls zwei Punkte L11, L12; L21, L22; ...; Li1, Li2 definiert. Diese definierten Punkte Li1, Li2 entsprechen von ihrer relativen Lage zueinander den aus dem Schneidgut 3 ausgewählten Punkten Pi1, Pi2. Die Punkte Li1, Li2 können ebenfalls durch von einem im Schnittlagenbild definierten Ursprungspunkt 0 ausgehende Vektoren N11, N12; N21, N22; ...; Ni1, Ni2 dargestellt werden. Ebenso können sie durch die Angabe von Koordinaten $(Xi1/Yi1)l,(Xi2/Yi2)l$ definiert werden. Dieses Schnittlagenbild wird in digitalisierter Form im Rechner 9 gespeichert. In den Figuren sind die Punkte Lin durch Kreuze in einem Kreis dargestellt.

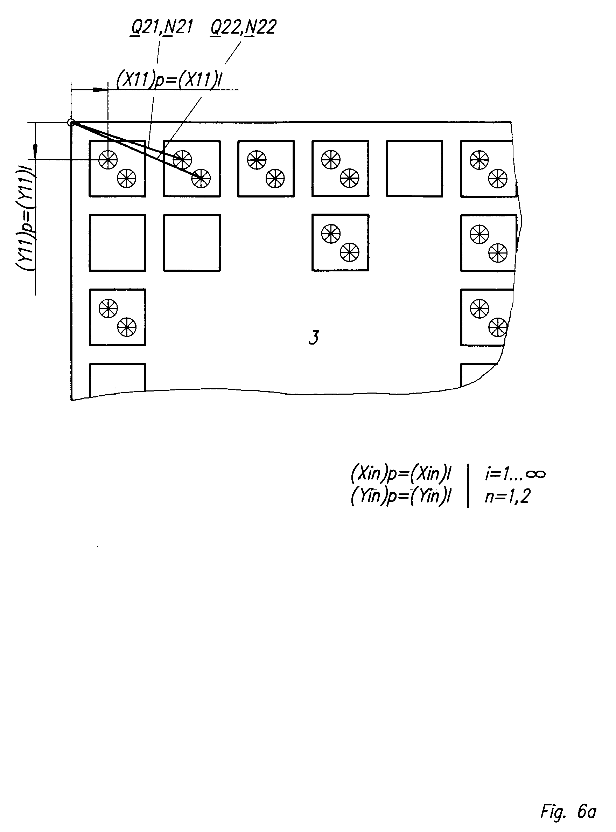

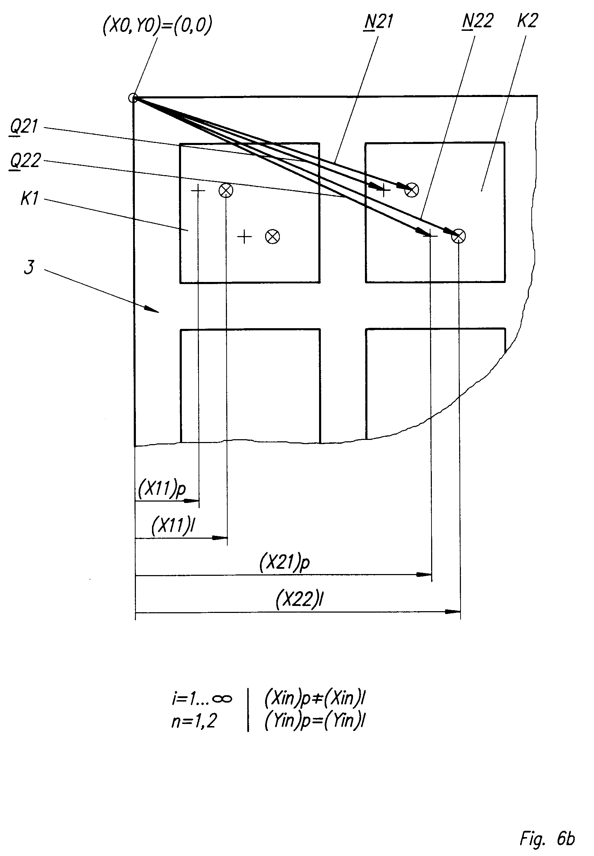

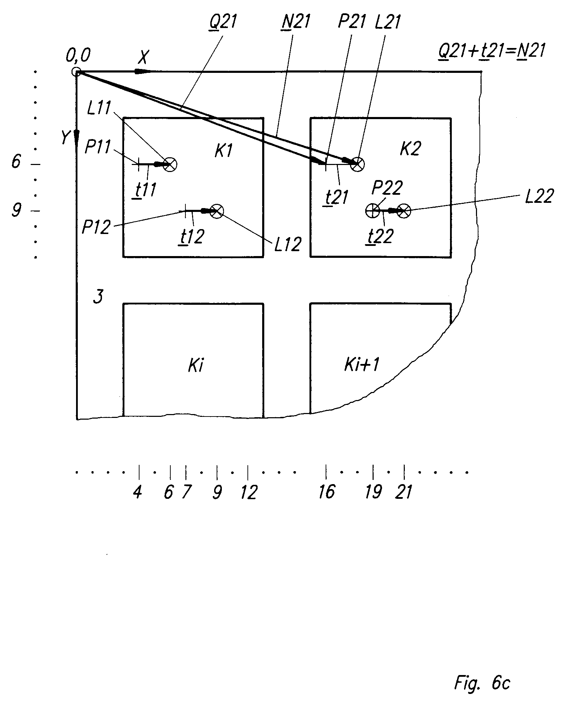

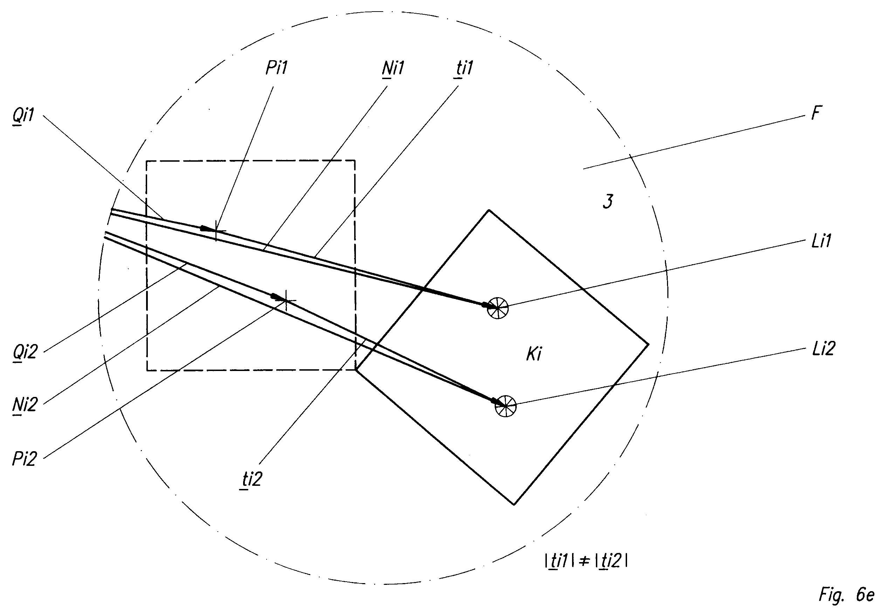

In Fig. 6c sind die einzelnen Punkte Pin, Lin durch folgende Koordinaten charakterisiert:

P11 = (4, 6) ; P12 = (7, 9)
L11 = (6, 6) ; L12 = (9, 9)

P21 = (16, 6) ; P22 = (19, 9)
L21 = (18, 6) ; L22 = (21, 9).

Durch die auf dem Schneidportal 5 angeordnete CCD-Kamera 8 kann das Schneidgut 3 zeilenweise innerhalb bestimmter Bereiche abgetastet werden. Ohne das die Kamera bewegt wird, ergibt sich dabei ein annähernd rechteckiger erfaßter Bildausschnitt. Ein solcher Bildausschnitt ist in Fig. 2 beispielsweise mit G gekennzeichnet und ist dann realisierbar, wenn die Kamera 8 direkt über einen Punkt Zi positioniert wird, der das Zentrum des Bildausschnitts Gi bildet. Innerhalb dieses Bildausschnittes werden von der Kamera 8 die optisch auffälligen ausgewählten Punkte Pi1, Pi2 erkannt und ihre Lage, bezogen auf den Ursprungspunkt 0, im Rechner 9 ermittelt. Die Erfassung bzw. Erkennung der Punkte Pi durch die elektronische Kamera 8 erfolgt dadurch, daß ein gemusteter Stoff bei seiner Abtastung in der Kamera 8 ein Spektrum unterschiedlicher Frequenzen erzeugt. Die spezifischen Punkte Pi müssen nun so gewählt werden, daß sie aus diesem Frequenzspektrum nach oben oder unten herausragen. Im idealen Fall, der von der Praxis aber entfernt ist, würde ein schwarzer Punkt auf einer weißen Unterlage ein einfaches L-Signal und ein weißer Punkt auf einer schwarzen Unterlage ein einfaches H-Signal initiieren, wodurch diese sofort identifizierbar sind. Die Punkte Li1, Li2 aus dem gespeicherten Schnittlagenbild werden nun im Rechner 9 mit den erfaßten Punkten Pi1, Pi2 verglichen, d.h. überprüft, in wie weit die sie abbildenden Vektoren Qi1, Qi2 von den Vektoren Ni1, Ni2 abweichen, die im Schnittlagenbild die Punkte Li1, Li2 definieren. Diese Abweichung kann durch je einen Vektor ti dargestellt werden. Die in Fig. 6c dargestellten Abweichungsvektoren tin charakterisieren die Koordinaten:

t11 = (4, 6 / 6, 6) ; t12 = (7, 9 / 9, 9)
t21 = (16, 6 / 18,6) ; t22 = (19, 9 / 21, 9).

Damit steht fest, wie weit das Schnittlagenbild einer einzelnen Kontur Ki von seiner optimalen Lage zum Musterverlauf des Schneidgutes abweicht. Nachdem die die Abweichung definierende Vektoren ti1, ti2 ermittelt wurde, verzweigt das Hauptprogramm im Rechner 9 in ein Unterprogramm. Hier wird das Schnittlagenbild um die Vektoren Ai1, Ai2, die exakt den Vektoren ti1, ti2 entgegengerichtet sind, gedreht. Nunmehr stimmt die Kontur Ki mit ihrer idealen Stellung auf dem Schneidgut 3 überein, d.h.:

Pi1 = Li1 und Pi2 = Li2 (vgl. Fig. 6a).

Dieses sich selbst veränderte Softwareprogramm wird als neues Schnittlagenbild im Hauptprogramm gespeichert, in das nun zurückgesprungen wird und das Schneidportal 5 bzw. der Schneidkopfträger 6 werden dann in Bewegung gesetzt und der Zuschnitt erfolgt in bekannter Weise. Mit der Bewegung der Schneiddüse 7 bewegt sich gleichzeitig auch die Kamera 8, so daß direkt der nächste Bereich des Schneidgutes zeilenweise abgetastet werden kann. Auch erfolgt, wie zuvor beschrieben, die Überprüfung der Soll/Ist Abweichung des Schnittlagenbildes zum späteren Fertigteil und durch eine entsprechende Drehung erfolgt die Anpassung und daran wieder der Zuschnitt.

Bei der Darstellung nach Fig. 6c ist die Länge der Vektoren ti1 gleich der Länge der Vektoren ti2, d.h.: |ti1| = |ti2|. Um die Soll/Ist-Abweichung zu korrigieren ist nur eine Verschiebung notwendig. Fig. 6e zeigt, daß zur Erreichung der Sollage auch eine Verdrehung notwendig ist. D.h.: |ti1| ≠ |ti2|, weil sowohl die x-Koordinaten als auch die y-Koordinaten der Punkte Pin und Lin von einander abweichen.

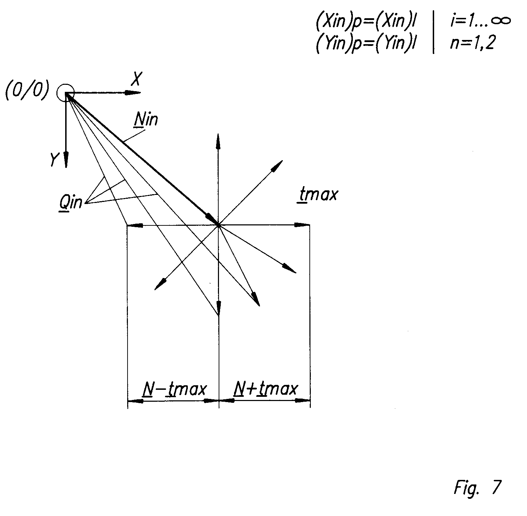

Je nach Brennweite der Kamera ergibt sich eine unterschiedliche Bildgröße und damit auch eine unterschiedliche Auflösung und Genauigkeit bei der Ermittlung des Musterverlaufs. Bei der Verwendung von 512/512 Bildpunkten je Bildausschnitt ergibt sich beispielsweise bei einer Bildgröße von 10x10mm eine Auflösung von 10mm/512. Um die Bearbeitungsgeschwindigkeit zu steigern, wird dieser Effekt dahingehend ausgenutzt, daß eine Grobbild- und eine Feinbildpositionierung realisiert. Beispielsweise wird die Brennweite so gewählt, daß ein Bildausschnitt von 1m x 1m realisierbar ist. Mit dieser Auflösung wird der Musterverlauf zeilenweise abgetastet. Folglich ergibt sich auch nur eine grobe Auflösung der Punkte Pi1, Pi2. Der daraus zu bildende Vektor Qi1, Qi2 ist mit einem von der Grobheit der Auflösung abhängigen Fehler behaftet. Bei der Vorgabe des Vergleichsprogrammes zwischen Ist- und Sollwert der Mustermarke wird ein Toleranzvektor tmax definiert (vgl. Fig. 7). Nach der vollständigen Aufnahme des Grobbildes G wird für jede Kontur Ki ermittelt, ob die Beziehung:

Ni1-tmax < Qi1 < Ni1 + tmax

und

Ni2-tmax < Qi2 < Ni2 + tmax

erfüllt ist.

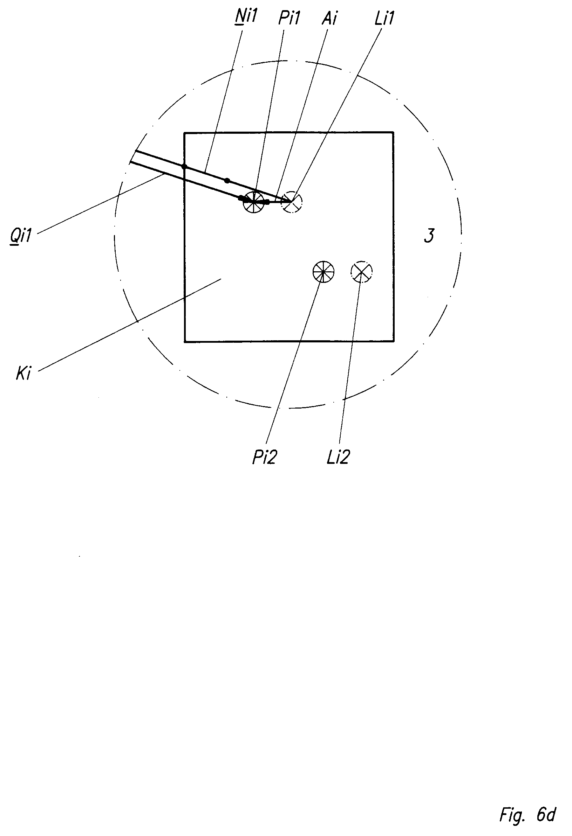

Sind diese Voraussetzungen erfüllt, erhält die Schneidanlage 1 vom Rechner 9 den Befehl, den Zuschnitt vorzunehmen. Ist die Bedingung nicht erfüllt, wird die Kamera in eine Position zur Aufnahme eines Feinbildes (F) verbracht, d.h. die Brennweite wird vergrößert. Beispielsweise so weit, daß sich ein Bildbereich von 10x10mm ergibt. Daraus resultiert das hohe Auflösungsvermögen von 10mm/512 (vgl. Fig. 6d, 6e). Nunmehr erfolgt wiederum eine zeilenweise Abtastung des Musterverlaufs und die ermittelten Punkte Pi1, Pi2 werden mit den korrespondierenden Punkten Li1, Li2 der auszuschneidenden Kontur Ki wie bereits beschrieben verglichen. Aus den ermittelten Vektoren ti1, ti2 der Abweichung werden die entgegengerichteten Vektoren Ai1, Ai2 gebildet, um die eine Drehung oder Verschiebung der Kontur Ki erfolgen muß, um den Sollzuschnitt zu ermöglichen.

Vom Hauptprogramm wird dann wieder in das bereits erwähnte Unterprogramm der Steuerung gesprungen und das Schnittlagenbild partiell entsprechend verändert. Daran anschließend erfolgt der Zuschnitt.

Je nach von der Kamera 8 erzielten Auflösungsgrad können entweder mehrere Konturen Ki-1, Ki, Ki + 1 ... gleichzeitig korrigiert, akzeptiert und geschnitten werden, ohne daß ein neues Grobbild (G) oder Feinbild (F) eingestellt wird, oder aber für jede einzelne Kontur Ki1 die Soll-/Istlage geprüft, der Abweichungsvektor ti ermittelt und, sofern dieser größer ist als tmax, erfolgt zuerst die Drehung um den Vektor Ai und dann wird die Kontur Ki geschnitten, andernfalls erfolgt der Zuschnitt direkt.

Sofern eine Drehung des Schnittlagenbildes nicht notwendig ist, um eine Soll-Ist-Abweichung zu eliminieren, weil beispielsweise Musterabweichungen, bzw. Toleranzen nur in einer Richtung auftreten und die zu schneidende Stofflage kantengesteuert in den Schneidbereich transportiert wird, so daß auch die Transportbewegung der Stofflage keine Abweichungen erfährt, ist es um Rechenzeit zu sparen, völlig ausreichend, anstelle von zwei spezifischen Punkten [Li1,Li2] je Kontur Ki nur einen spezifischen Punkt Li zu definieren und entsprechend auch nur einen optisch auffälligen Punkt Pi im Schneidgut 3 zu detektieren. Der Verfahrensablauf (nach Anspruch 1) entspricht aber dem zuvor beschriebenen und ist leicht nachvollziehbar, wenn jeweils der Index "i2" nicht beachtet wird. Die Gleichungen haben weiterhin Gültigkeit.

**Patentansprüche**

1. Verfahren zum rapportgerechten Zuschnitt von richtungsbetonten Materialien auf einer numerisch gesteuerten Schneidanlage, wobei die Kontur- und Lagedaten jeder auszuschneidenden Kontur und das sich daraus ergebende Schnittlagenbild als Schneidprogramm in einem Rechner gespeichert sind und die Oberfläche (der Musterverlauf) des Schneidguts von einer elektronischen Kamera erfaßt wird,

   dadurch gekennzeichnet, daß

   - aus der Oberfläche (dem Musterverlauf) des Schneidguts (3) ein durch ein Koordinatenpaar (Xi/Yi)p darstellbarer und optisch auffälliger spezifischer Punkt (Pi) ausgewählt wird,

   - jeder auszuschneidenden Kontur (Ki) innerhalb ihres Umfangs ebenfalls durch ein Koordinatenpaar (Xi/Yi)l darstellbarer Punkt (Li) zugeordnet wird,

   - die Festlegung der Punkte (Li) und (Pi) so erfolgt, daß die relative Lage der sie beschreibenden Koordinatenpaare (Xi/Yi)l und (Xi/Yi)p zueinander durch die Lagevektoren (Ni) und (Qi) darstellbar ist und die mathematische Beziehung ($|Ni| = |Qi|$) herstellbar ist,

   - die Koordinaten (Xi/Yi)p gemessen und im Rechner (9) gespeichert werden,

   - die Kamera (8) über das Schneidgut (3) geführt wird, der zuvor definierte Punkt (Pi) erfaßt, dessen absolute Lage dem Rechner (9) mitgeteilt, und hier dann gespeichert wird,

   - im Rechner (9) das aus den Kontur- und Lagedaten gebildete Schneidprogramm verglichen wird mit der Lage der Punkte (Pi), wobei gleichzeitig der Vektor (Ai) der Abweichung der Punkte (Pi) zu den Punkten (Li) ermittelt wird, und abschließend

   - die im Schneidprogramm gespeicherten Konturen (Ki) jeweils um den Vektor (Ai) verschoben werden und die sich dann einstellende Lage als neues Schneidprogramm gespeichert wird, nach welchem dem der Zuschnitt ausgeführt wird.

2. Verfahren zum rapportgerechten Zuschnitt von richtungsbetonten Materialien auf einer numerisch gesteuerten Schneidanlage, wobei die Kontur- und Lagedaten jeder auszuschneidenden Kontur und das sich daraus ergebende Schnittlagenbild als Schneidprogramm in einem Rechner gespeichert sind und die Oberfläche (der Musterverlauf) des Schneidguts von einer elektronischen Kamera erfaßt wird,

   dadurch gekennzeichnet, daß

   - aus der Oberfläche (dem Musterverlauf) des Schneidguts (3) mindestens zwei durch je ein Koordinatenpaar (Xi1/Yi1)p; (Xi2/Yi2)p darstellbare und optisch auffällige spezifische Punkte (Pi1, Pi2) ausgewählt werden,

   - jeder auszuschneidenden Kontur (Ki) innerhalb ihres Umfangs dieselbe Anzahl durch je ein Koordinatenpaar (Xi1/Yi1)l; (Xi2/Yi2)l darstellbarer Punkte (Li1, Li2)) zugeordnet wird,

   - die Festlegung der Punkte (Li1, Li2) und (Pi1, Pi2) so erfolgt, daß die relative Lage der sie beschreibenden Koordinatenpaare (Xi1/Yi1)l und (Xi1/Yi1)p zueinander durch dieselben Lagevektoren (Ni) und (Qi) darstellbar sind und die mathematische Beziehung ($|Ni| = |Qi|$) herstellbar ist,

- die Koordinaten [(Xi1/Yi1)p; (Xi2/Yi2)p] gemessen und im Rechner (9) gespeichert werden,
- die Kamera (8) über das Schneidgut (3) geführt wird, die zuvor definierten Punkte (Pi1, Pi2) erfaßt, deren absolute Lage dem Rechner (9) mitgeteilt, und hier dann gespeichert werden,
- im Rechner (9) das aus den Kontur- und Lagedaten gebildete Schneidprogramm verglichen wird mit der Lage der Punkte (Pi1, Pi2), wobei gleichzeitig der Vektor (Ai) der Abweichung der Punkte (Pi1, Pi2) zu den Punkten (Li1, Li2) ermittelt wird, und abschließend
- die im Schneidprogramm gespeicherten Konturen (Ki) jeweils um den Vektor (Ai) verschoben bzw. gedreht werden und die sich dann einstellende Lage als neues Schneidprogramm gespeichert wird, nach welchem dem der Zuschnitt ausgeführt wird.

3. Verfahren nach Anspruch 1 oder 2,

dadurch gekennzeichnet,

daß zuvor für die optisch auffälligen Punkte (Pi1, Pi2)) der entsprechende Signalpegel bei der Bildverarbeitung der Kamera (8) ermittelt und im Rechner (9) gespeichert wird.

4. Verfahren nach Anspruch 3,

dadurch gekennzeichnet,

daß die Erfassung der Lagedaten der Punkte (Pi1, Pi2) durch zeilenweises Abtasten der Strukturen des Schneidgutes (3) erfolgt und der jeweilige Pegel der durch eine Strukturänderung bei der Bildverarbeitung der Kamera (8) hervorgerufenen Signaländerung mit dem gespeicherten Signalpegel verglichen wird und bei Übereinstimmung beider Pegel das Zeilensignal der Kamera (8) als Referenz für die Lagedaten der Punkte (Pi1, Pi2) herangezogen wird.

5. Verfahren nach Anspruch 1 oder 2,

dadurch gekennzeichnet,

daß die Kamera (8) in einer Grobbilddarstellung (G) die optisch auffälligen Punkte (Pi1, Pi2) in der Oberfläche des Schneidguts (3) erfaßt und deren absolute Lagedaten in einer Feinbilddarstellung (F) ermittelt werden, wobei die Feinbilddarstellung (F) ein vergrößerter Ausschnitt der Grobbilddarstellung (G) ist.

6. Verfahren nach Anspruch 5,

dadurch gekennzeichnet,

daß nach dem Erfassen der optisch auffälligen Punkte (Pi1, Pi2) in der Grobbilddarstellung (G) aus den gewonnenen Daten die Lagevektoren (Qi1, Qi2) gebildet und mit dem im Recher (9) gespeicherten Lagevektoren (Ni1, Ni2) der auszuschneidenden Konturen (Ki) verglichen wird und nur wenn die Werte der Lagevektoren (Pi1, Pi2) um einen Toleranzvektor (tmax) von den Lagevektoren (Ni1, Ni2) abweichen und die mathematischen Beziehungen:

$$Ni1-tmax < Pi1 < Ni1 + tmax$$

und

$$Ni2-tmax < Pi2 < Ni2 + tmax$$

nicht mehr gelten, die Kamera (8) in die Feinbilddarstellung (F) übergeht.

Fig. 1

Fig. 2

Fig. 3

Fig. 4

N21   K1   N22   L21   K2   L22                    K

$(Y_{i1})_l$
$(Y_{i2})_l$

Ni1

Ni2

Ki

Schnittlagenbild

3

$(X_{i1})_l$

$(X_{i2})_l$

Fig. 5

$Q21, N21$   $Q22, N22$

$(X11)p = (X11)l$

$(Y11)p = (Y11)l$

3

$(Xin)p = (Xin)l$   $i = 1 ... \infty$
$(Yin)p = (Yin)l$   $n = 1, 2$

Fig. 6a

$(X0,Y0)=(0,0)$

$\underline{N21}$    $\underline{N22}$    K2

$\underline{Q21}$

$\underline{Q22}$

K1

3

$(X11)p$

$(X11)l$

$(X21)p$

$(X22)l$

$$\left.\begin{array}{l} i=1\ldots\infty \\ n=1,2 \end{array}\right| \begin{array}{l} (Xin)p\neq(Xin)l \\ (Yin)p=(Yin)l \end{array}$$

Fig. 6b

Fig. 6c

Fig. 6d

Fig. 6e

$|\underline{ti1}| \ne |\underline{ti2}|$

Qi1

Pi1   Ni1   ti1

F

3

Li1

Qi2

Li2

Ni2

Ki

Pi2

ti2

EP 0 494 433 A2

16

$$(Xin)p=(Xin)l \quad | \quad i=1...\infty$$
$$(Yin)p=(Yin)l \quad | \quad n=1,2$$

Fig. 7

NC – Programm                    Bildverarbeitungssystem

Fahre in Pos. Z1

Bild erstellen

Grobbild mit
Musternummer

Muster K1 bis Kn
Pos. Z1

Fahre in Pos. Fi
Feinbild F

Bild erstellen
Blendeneinstellung
Focusierung
Bildausschnitt

Muster K1
X/Y–Korrektur
Drehwinkel

Teil verschieben
X/Y–Korrektur
event. Drehung

Teil schneiden
von Pos. Zi ; Fi

nach Kn neues
Grobbild

Fig. 8